# EUROPÄISCHE PATENTSCHRIFT

(11) **EP 3 357 788 B1**
(45) Veröffentlichungstag und Bekanntmachung des Hinweises auf die Patenterteilung: **14.04.2021**
(21) Anmeldenummer: 18152177.4
(22) Anmeldetag: 17.01.2018
(51) Int. Cl.: B62B 15/00, B62B 17/00

(54) **ANHÄNGERSCHLITTEN**
TRAILER CARRIAGE
CHARIOT DE REMORQUAGE

(30) Priorität: 07.02.2017 DE 102017102325; 09.06.2017 DE 102017112734
(43) Veröffentlichungstag der Anmeldung: 08.08.2018
(73) Patentinhaber: Gerhard Fetzer GmbH, 75446 Wiernsheim-Pinache (DE)
(72) Erfinder: Fetzer, Gerhard, 75417 Mühlacker (DE)
(74) Vertreter: Ostertag & Partner Patentanwälte mbB

(56) Entgegenhaltungen:
- DE-U1-202014 100 211
- US-A- 3 480 289
- US-A- 4 271 762
- US-A1- 2004 075 226

## Beschreibung

Die Erfindung betrifft einen Anhängerschlitten für Schneetransportfahrzeuge mit
a) einer Rahmenstruktur, welche eine Ladefläche vorgibt;
b) wenigstens zwei zueinander parallelen Schneekufen, welche die Rahmenstruktur tragen und eine Gleitebene definieren;
c) einer Deichseleinrichtung, mittels welcher der Anhängerschlitten an ein Schneetransportfahrzeug ankoppelbar ist.

Aus der US 4,271,762 A, der US 3,480,289 A und der DE 20 2014 100 211 U1 sind verschiedene Gleitfahrzeuge bekannt, die teils für die Bewegung auf Schnee geeignet sind.

In schneereichen Gebieten werden zum Transport von Gütern in der Regel motorisierte Transportfahrzeuge verwendet, an die häufig auch Anhängerschlitten der eingangs genannten Art angekoppelt werden können, um die Ladefläche zu erhöhen.

Auf Schnee gibt es jedoch das Problem, dass solche Anhängerschlitten bei Kurvenfahren leicht in Schlingern oder Schleudern geraten, wobei die Anhängerschlitten im schlimmsten Fall umkippen können. Hierdurch kommt es regelmäßig zu Unfällen, zum Teil mit Todesfolge.

Es ist daher Aufgabe der Erfindung, einen Anhängerschlitten der eingangs genannten Art bereitzustellen, bei dem diese Gefahren zumindest verringert sind.

Diese Aufgabe wird bei einem Anhängerschlitten der eingangs genannten Art dadurch gelöst, dass
d) wenigstens eine Spurstabilisierungsfinne mittels einer Befestigungseinrichtung an der Rahmenstruktur befestigt ist, wobei die Spurstabilisierungsfinne in einer Arbeitsstellung zumindest teilweise nach unten über die Gleitebene hinausragt;
   und
e) die Spurstabilisierungsfinne ein Finnenblatt mit einem unteren Eingreifrand aufweist, der einen vorderen geradlinigen Eintauchabschnitt und einen hinteren Gleitabschnitt mit einer im Wesentlichen senkrecht von dem Finnenblatt abragenden Gleitrippe aufweist, durch die eine untere Gleitfläche ausgebildet ist.

In dieser Arbeitsstellung kann die Spurstabilisierungsfinne folglich in eine auf einem Boden liegende Schneeschicht eingreifen, wodurch der Anhängerschlitten spurstabilisiert auf der Schneeschicht gleitet. Bei Kurvenfahrten vermindert die Spurstabilisierungsfinne ein Schlingern oder Schleudern, so dass auch die Gefahr verringert ist, dass der Anhängerschlitten umkippt. Bei einer planen Spurstabilisierungsfinne besteht die Gefahr, dass sich die Spurstabilisierungsfinne in den Boden eingraben kann, wenn weniger dicke Schneeschichten durchquert werden. Diese Gefahr ist durch das Finnenblatt verringert.

Damit die Spurstabilisierungsfinne zuverlässig arbeiten kann, muss die Schneeschicht eine gewisse Mindestdicke haben; es soll möglichst vermieden werden, dass die Spurstabilisierungsfinne auf den nackten Boden aufschlägt. Damit der Anhängerschlitten aber auch bei geringeren Schneetiefen genutzt werden kann, ist es günstig, wenn die Spurstabilisierungsfinne von der Arbeitsstellung in eine Ruhestellung, und umgekehrt, verschwenkt werden kann. In der Ruhestellung ist die Spurstabilisierungsfinne vom Boden wegbewegt. Auch für den Transport des Anhängerschlittens, beispielsweise auf einem gesonderten Anhänger, ist eine solche Ruhestellung der Spurstabilisierungsfinne günstig, da der Anhängerschlitten dann auf seinen Schneekufen platziert werden kann, ohne dass die nach unten durchragende Spurstabilisierungsfinne stört. Vorzugsweise kann die Spurstabilisierungsfinne mittels einer Arretiereinrichtung in der Ruhestellung arretiert werden.

Es ist besonders günstig, wenn die Spurstabilisierungsfinne um eine Schwenkachse verschwenkbar gelagert ist, welche parallel zur Gleitebene und senkrecht zu den Längsachsen der Schneekufen verläuft. Bei einer normalen Ausrichtung des Anhängerschlittens verläuft diese Schwenkachse also horizontal und quer zur Fahrtrichtung des Anhängerschlittens.

Es ist besonders vorteilhaft, wenn die Spurstabilisierungsfinne in ihrer Arbeitsstellung schwenkbeweglich um die Schwenkachse bleibt. Auf diese Weise kann die Spurstabilisierungsfinne Bodenunebenheiten, die auch durch unterschiedliche Schneefestigkeiten hervorgerufen werden können, nachgeben und nach oben und wieder nach unten verschwenken.

Besonders bevorzugt ist die Spurstabilisierungsfinne an einem hinteren Ende der Rahmenstruktur befestigt. Dort bewirkt die Spurstabilisierungsfinne die größte Stabilisierungswirkung.

Eine sichere Befestigung kann erreicht werden, wenn die Befestigungseinrichtung eine Haltestruktur umfasst, welche einen hinteren Querholm der Rahmenstruktur umgreifen kann. Eine solche Haltestruktur kann dann beispielsweise mittels Schrauben an dem Querholm verklemmt werden.

Es ist besonders vorteilhaft, wenn die Befestigungseinrichtung eine Vorspanneinrichtung umfasst, mittels welcher die Spurstabilisierungsfinne unter Vorspannung in ihre Arbeitsstellung gedrückt wird. Auf diese Weise kann die Spurstabilisierungsfinne mit einem gezielten Anpressdruck in die Schneeschicht eingreifen.

Dabei ist es günstig, wenn die Vorspanneinrichtung eine Federeinrichtung umfasst.

Bei einer technisch vorteilhaften Variante umfasst die Vorspanneinrichtung wenigstens eine Schenkelfeder oder eine Doppelschenkelfeder.

Wenn die Schwenkachse vorhanden ist, ist es von Vorteil, wenn die Schenkelfeder oder die Doppelschenkelfeder auf der Schwenkachse sitzt.

Eine vorteilhafte Anpassung an unterschiedliche Witterungs- und Ortsbedingungen kann erfolgen, wenn die Vorspanneinrichtung derart eingerichtet ist, dass die Vorspannkraft, die auf die Spurstabilisierungsfinne wirkt, einstellbar ist.

Es ist besonders von Vorteil, wenn das Finnenblatt an einer vorderen Kante, die in Richtung der Deichseleinrichtung weist, eine Zahnstruktur aufweist. Auf diese Weise kann Änderungen in der Bodenbeschaffenheit besser Rechnung getragen werden. Bevorzugt ist diese Zahnstruktur eine Sägezahnstruktur.

Nachfolgend werden Ausführungsbeispiele der Erfindung anhand der Zeichnungen näher erläutert. In diesen zeigen:
- Figur 1: eine Seitenansicht eines Anhängerschlittens mit einer Spurstabilisierungsfinne, die in einer Arbeitsstellung, in welcher sie in eine Schneeschicht eingreifen kann, und einer Ruhestellung gezeigt ist;
- Figur 2: eine perspektivische Ansicht des Anhängerschlittens von Figur 1;
- Figur 3: eine perspektivische Detailansicht einer Spurstabilisierungsfinne und einer Befestigungseinrichtung mit einer Vorspanneinrichtung gemäß einem ersten nicht erfindungsgemäßen Ausführungsbeispiel, wobei die Spurstabilisierungsfinne in ihrer Arbeitsstellung gezeigt ist;
- Figur 4: eine Ansicht aus der Blickrichtung des Pfeiles IV in Figur 3 auf die Befestigungseinrichtung in teilweiser Durchsicht;
- Figur 5: einen Schnitt entlang der Schnittlinie V-V in Figur 4 in größerem Maßstab;
- Figur 6: eine der Figur 3 entsprechende perspektivische Detailansicht der Befestigungseinrichtung mit einer abgewandelten Vorspanneinrichtung, wobei die Spurstabilisierungsfinne in ihrer Ruhestellung gezeigt ist;

- Figur 7: eine perspektivische Detailansicht einer Spurstabilisierungsfinne und einer Befestigungseinrichtung gemäß einem zweiten Ausführungsbeispiel, bei welcher auch eine Arretiereinrichtung veranschaulicht ist;
- Figur 8: eine Ansicht aus der Blickrichtung des Pfeiles VIII in Figur 7 auf die Befestigungseinrichtung;
- Figur 9: einen Schnitt entlang der Schnittlinie IX-IX in Figur 8 in größerem Maßstab;
- Figur 10: eine Seitenansicht einer Spurstabiliserungsfinne gemäß einem dritten Ausführungsbeispiel mit einer Sägezahnstruktur;
- Figur 11: eine Ausschnittsvergrößerung der Sägezahnstruktur.

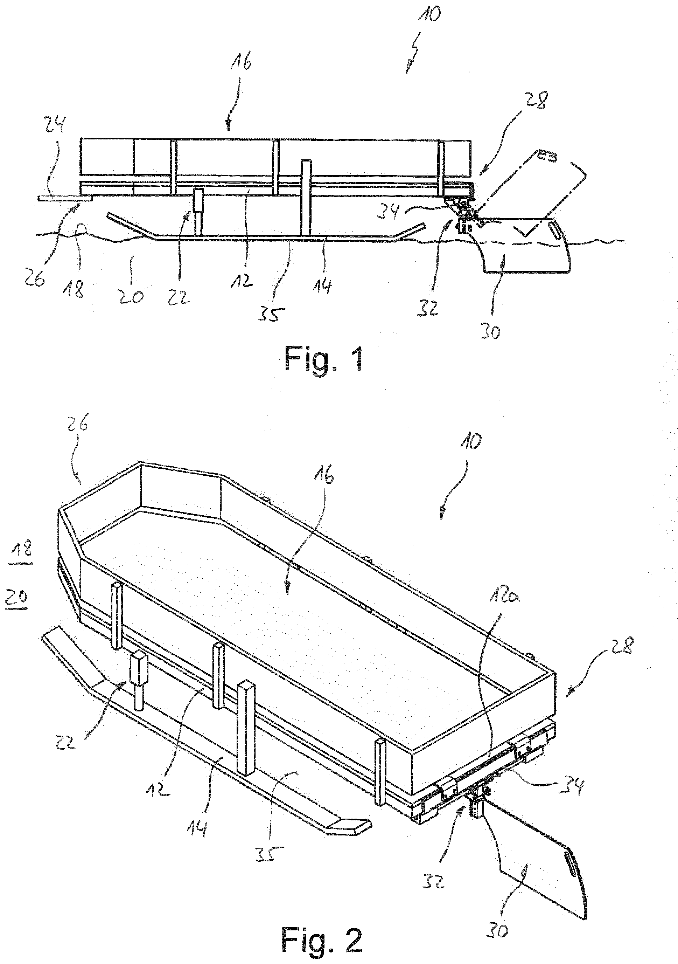

Die Figuren 1 und 2 zeigen einen Anhängerschlitten 10, der als Anhänger für Schneetransportfahrzeuge konzipiert ist. Der Anhängerschlitten 10 umfasst eine Rahmenstruktur 12, welcher von zwei zueinander parallele Schneekufen 14 getragen ist und eine Ladefläche 16 vorgibt. Auf den Schneekufen 14 kann der Anhängerschlitten 10 auf einem mit einer Schneeschicht 18 bedeckten Boden 20 gleiten, wobei die Schneekufen 14 eine Gleitebene 35 definieren. Die Schneekufen 14 sind über Stoßdämpfer 22 gelagert. Mittels einer Deichseleinrichtung 24, die gelenkig oder starr am vorderen Ende 26 der Rahmenstruktur 12 gelagert sein kann, kann der Anhängerschlitten 10 an ein nicht eigens gezeigtes Zug-Transportfahrzeug mit einer entsprechenden Anhängerkupplung angehängt werden.

Der Anhängerschlitten 10 umfasst eine Spurstabilisierungsfinne 30, welche von der Rahmenstruktur 12 getragen ist und in einer Arbeitsstellung zumindest teilweise nach unten über die durch die Schneekufen 14 definierte Gleitebene 35 hinausragt, so dass die Spurstabilisierungsfinne 30 in eine vorhandene Schneeschicht 18 eingreifen kann.

Die Spurstabilisierungsfinne 30 ist an dem hinteren Ende 28 der Rahmenstruktur 12 mit Hilfe eine Befestigungseinrichtung 32 befestigt. Die Befestigungseinrichtung 32 greift an einem hinteren Querholm 12a der Rahmenstruktur 12 an. Die Spurstabilisierungsfinne 30 ist um eine Schwenkachse 34 verschwenkbar an der Befestigungseinrichtung 32 gelagert, die parallel zu der durch die Schneekufen 14 aufgespannten Gleitebene 35 und senkrecht zu deren Längsachsen verläuft. Die Spurstabilisierungsfinne 30 bleibt in der Arbeitsstellung um die Schwenkachse 34 schwenkbeweglich. Außerdem kann die Spurstabilisierungsfinne 30 von der Arbeitsstellung in eine Ruhestellung verschwenkt werden, in welcher Sie vom Boden 20 weg nach oben bewegt ist. Wenn die Spurstabilisierungsfinne 30 in die Schneeschicht 18 eingreift, gleitet der Anhängerschlitten 10 spurstabilisiert und die Gefahr, dass der Anhängerschlitten 10 ins Schlingern oder Schleudern gerät, zumindest geringer als bei einem Anhängerschlitten 10 ohne eine solche Spurstabilisierungsfinne 30.

Bei den hier gezeigten Ausführungsbeispielen trägt der Anhängerschlitten 10 eine einzige Spurstabilisierungsfinne 30, die mittig bezogen auf die Quererstreckung des Anhängerschlittens 10 angeordnet ist. Bei nicht eigens gezeigten Abwandlungen können aber auch mehr als eine Spurstabilisierungsfinne 30 vorhanden sein. So können beispielsweise insbesondere zwei Spurstabilisierungsfinnen 30 rechts und links am hinteren Ende 28 der Rahmenstruktur 12 gelagert sein.

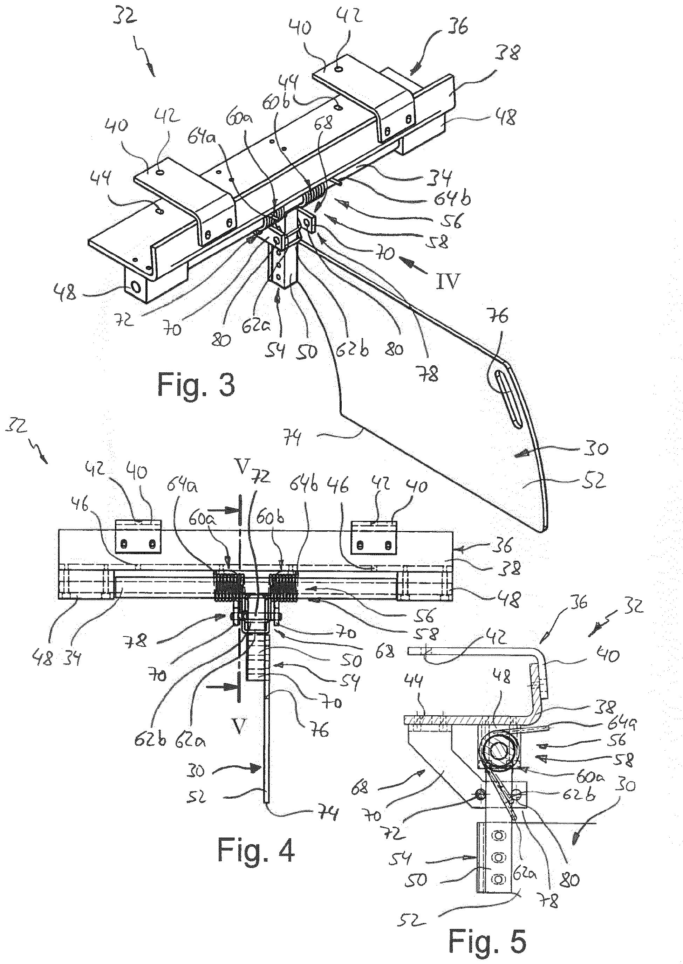

Die Figuren 3 bis 6 zeigen ein erstes nicht erfindungsgemäßes Ausführungsbeispiel der Spurstabilisierungsfinne 30 und der Befestigungseinrichtung 32.

Die Befestigungseinrichtung 32 umfasst eine Haltestruktur 36, welche den hinteren Querholm 12a der Rahmenstruktur 12 umgreifen kann. Hierzu ist ein unterer, im rechten Winkel gekanteter Haltewinkel 38 vorhanden, an welchem zwei obere, ebenfalls im rechten Winkel gekantete Klemmbügel 40 befestigt sind, so dass die Haltestruktur im Bereich der Klemmbügel 40 einen C-förmiger Querschnitt beschreibt, was in Figur 5 gut zu erkennen ist. Die Haltestruktur 36 kann so bezogen auf den Anhängerschlitten 10 von hinten auf den hinteren Querholm 12a der Rahmenstruktur 12 aufgeschoben werden, wobei die miteinander verbundenen Schenkel des Haltebügels 38 und der Klemmbügel 40 nach hinten weisen und der anderer Schenkel des Haltebügels 38 an der Unterseite des hinteren Querholms 12a und die anderen Schenkel der Klemmbügel 40 an der Oberseite des hinteren Querholms 12a der Rahmenstruktur 12 anliegen, wobei die freien Enden dieser Schenkel über den hinteren Querholm 12a überstehen.

Diese freien Enden der Klemmbügel 40 sind jeweils mit einer Durchgangsbohrung 42 versehen. Koaxial zu diesen Durchgangsbohrungen 42 sind auch Durchgangsbohrungen 44 in dem Haltebügel 38 vorhanden, so dass durch die Durchgangsbohrungen 42 der Klemmbügel 40 und die jeweils gegenüberliegenden Durchgangsbohrungen 44 im Halteblech 38 jeweils eine Klemmschraube 46 geführt werden kann, mit welchen die Haltestruktur 36 gegen den hinteren Querholm 12a der Rahmenstruktur 12 verklemmt werden kann. Die Klemmschrauben 46 sind nur in Figur 4 zu erkennen.

Auf seiner von den Klemmbügeln 40 abliegenden Unterseite 38a trägt der Haltebügel 38 zwei Lagerblöcke 48, in welchen die Schwenkachse 34 um ihre Längsachse verdrehbar gelagert ist.

Mittig zwischen den Lagerblöcken ragt eine Verbindungsstrebe 50 von der Schwenkachse 34 ab, so dass die Verbindungsstrebe 50 bei einer Drehung der Schwenkachse 34 verschwenkt. Beim vorliegenden Ausführungsbeispiel ist die Verbindungsstrebe 50 an die Schwenkachse 34 angeschweißt, aber auch lösbare Verbindungen, wie beispielsweise eine Schraubverbindung, sind möglich.

Die Spurstabilisierungsfinne 30 weist ein Finnenblatt 52 auf und ist lösbar an der Verbindungsstrebe 50 befestigt, so dass das die Spurstabilisierungsfinne 30 gegebenenfalls gegen eine anders geformte Spurstabilisierungsfinne ausgetauscht werden kann. Um eine ausreichend stabile Befestigung zu gewährleisten, ist das Finnenblatt 52 beim vorliegenden Ausführungsbeispiel mit mehreren Schrauben 54, beim konkreten Ausführungsbeispiel mit drei Schrauben 54, an die Verbindungsstrebe 50 angeschraubt. Bei nicht eigens gezeigten Abwandlungen können die Verbindungen zwischen der Verbindungsstrebe 50 und der Schwenkachse 34 oder zwischen der Verbindungsstrebe 50 und dem Finnenblatt 52 anders ausgebildet sein. Beispielsweise kann die Verbindung zwischen der Verbindungsstrebe 50 und der Schwenkachse 34 auch lösbar durch eine Schweißverbindung oder zwischen der Verbindungsstrebe 50 und dem Finnenblatt 52 durch Schweißen ausgebildet sein.

Die Befestigungseinrichtung 32 umfasst eine Vorspanneinrichtung 56, mittels welcher die Spurstabilisierungsfinne 30 unter Vorspannung in Richtung auf den Boden 20 in ihre Arbeitsstellung gedrückt wird, in der sie in die Schneeschicht 18 auf dem Boden 20 eingreifen kann. Hierzu umfasst die Vorspanneinrichtung 56 eine Federeinrichtung 58.

Beim vorliegenden Ausführungsbeispiel ist die Federeinrichtung 58 durch zwei Schenkelfedern 60a, 60b mit gegenläufiger Wicklung gebildet. Eines der Federenden der Schenkelfedern 60a, 60b ist als Druckschenkel 62a bzw. 62b C-förmig ausgebildet, so dass die Druckschenkel 62a und 62b die Verbindungsstrebe 50 umgreifen können. Das andere Federende der Schenkelfedern 60a, 60b ist als Stützschenkel 64a bzw. 64b geradlinig gehalten. Die Schenkelfedern 60a, 60b sitzen auf der Schwenkachse 34 und flankieren die Verbindungsstrebe 50 zu beiden Seiten, wobei die Druckschenkel 62a und 62b von oben kommend gegen die Verbindungsstrebe 50 andrücken und sich die Stützschenkel 64a und 64b gegen die Unterseite der Haltestruktur 36 abstützen.

Auf diese Weise wird die Spurstabilisierungsfinne 30 einerseits in ihre Arbeitsstellung gedrückt, in der sie in die Schneeschicht 18 eingreifen kann. Andererseits kann die Spurstabilisierungsfinne 30 dabei noch um die Schenkachse 34 nach oben und unten verschwenken, wodurch sie bei Bodenunebenheiten gegen die Vorspannung der Vorspanneinrichtung 56 nach oben ausweichen kann.

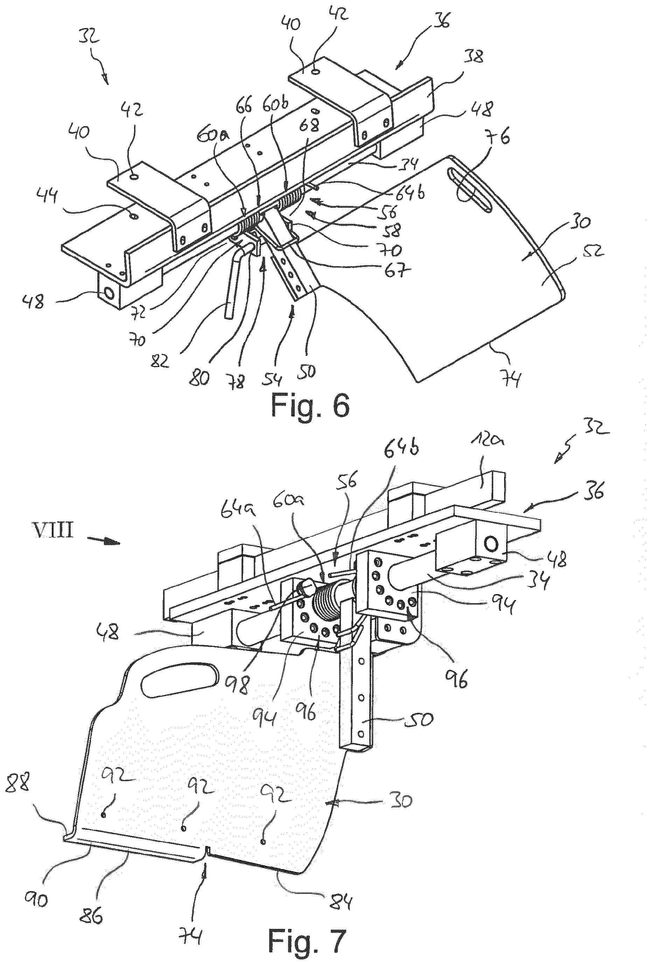

Bei einer in Figur 6 veranschaulichten Abwandlung der Federeinrichtung 58 sind die Schenkelfedern 60a, 60b zu einer Doppelschenkelfeder 66 zusammenfasst, bei welcher die Druckschenkel 62a, 62b zu einem Zwischenschenkel 67 verbunden sind. Dieser Zwischenschenkel 67 drückt entsprechend von oben kommend gegen die Verbindungsstrebe 50 an; die Stützschenkel 64a und 64b stützen sich wie bei den einzelnen Schenkelfedern 60a, 60b gegen die Unterseite der Haltestruktur 36 ab.

Bei weiteren, nicht eigens gezeigten Abwandlungen kann die Federeinrichtung 58 auch anders wirkende Federelemente, wie zum Beispiel eine oder mehrere Zugfedern oder Druckfedern oder auch eine oder mehrere Gasfedern umfassen. Zudem kann auch eine einzige Schenkelfeder ausreichend sein.

Nach unten, d.h. in Richtung des Bodens 20, ist der Bewegungsweg der Spurstabilisierungsfinne 30 mechanisch durch eine Anschlageinrichtung 68 begrenzt. Beim vorliegenden Ausführungsbeispiel wird ein weiteres Verschwenken der Verbindungsstrebe 50 begrenzt, wenn sie senkrecht auf der durch die Schneekufen 14 aufgespannten Gleitebene 35 steht. Hierfür sind an der Unterseite 38a der Haltestruktur 36 zwei als Winkel ausgebildete Wangen 70 befestigt, welche die Verbindungstrebe 50 zu beiden Seiten flankieren und durch ein Anschlagelement 72 miteinander verbunden sind, dass den mechanischen Anschlag vorgibt. Abhängig von der Lage des Anschlagselements 72 kann die Schwenkbewegung der Verbindungsstrebe 50, und damit die Schwenkbewegung der Spurstabilisierungsfinne 30, auch vorher oder erst später gestoppt werden.

Die Spurstabilisierungsfinne 30 weist einen unteren Eingreifrand 74 auf, der beim vorliegenden Ausführungsbeispiel geradlinig ist und parallel zu der durch die Schneekufen 14 vorgegebenen Gleitebene 35 verläuft, wenn die Spurstabilisierungsfinne 30 ihre Maximalauslenkung erreicht, die durch die Anschlagseinrichtung 68 vorgegebenen ist.

Beim vorliegenden Ausführungsbeispiel sind die Dimensionen und die Schwenkreichweite der Spurstabilisierungsfinne 30 so aufeinander abgestimmt, dass die Spurstabilisierungsfinne 30 etwa 15 cm bis 30 cm, insbesondere 20 cm in die Schneeschicht 18 eintauchen kann. Die Eintauchtiefe des der Spurstabilisierungsfinne 30 kann stufenlos eingestellt werden, wenn das Finnenblatt 52 in unterschiedlichen Höhen an der Verbindungsstrebe 50 befestigt werden kann. Dies ist zum Beispiel möglich, wenn die Schrauben 54 nicht durch Löcher im Finnenblatt 52, sondern durch ein dort vorhandenes Langloch geführt sind.

Die Spurstabilisierungsfinne 30 weist am hinteren Ende einen Fingerdurchgang 76 auf, so dass sie von Hand gegriffen und aus der Arbeitsstellung in ihre Ruhestellung bewegt werden kann. Damit die Spurstabilisierungsfinne 30 in ihrer Ruhestellung gegen die Vorspannung der Vorspanneinrichtung 56 arretiert werden kann, ist außerdem eine Arretiereinrichtung 78 vorhanden.

Bei vorliegenden Ausführungsbeispiel ist die Arretiereinrichtung 78 dadurch ausgebildet, dass die Wangen 70 der Anschlageinrichtung 68 bezogen auf den Anhängerschlitten 10 nach hinten weitergeführt sind und an ihren freien hinteren Enden jeweils einen Durchgang 80 aufweisen, durch welche ein Haltebolzen 82 gesteckt werden kann, wie es in Figur 6 zu erkennen ist.

Um die Spurstabilisierungsfinne 30 in ihrer Ruhestellung zu arretieren, wird diese somit von Hand nach oben geschwenkt, bis die Verbindungsstrebe 50 an den Durchgängen 80 der Wangen 70 vorbeigeführt ist, worauf dann der Haltebolzen 82 durch beide Durchgänge 80 gesteckt wird. Wenn die Spurstabilisierungsfinne 30 dann losgelassen wird, drückt die Vorspanneinrichtung 56 die Verbindungsstrebe 50 gegen den Haltebolzen 82.

Bei einer nicht eigens gezeigten Abwandlung kann die Arretiereinrichtung 78 auch einen Haken umfassen, der beispielsweise gelenkig an der Spurstabilisierungsfinne 30 angebracht ist und der in eine entsprechende Öse oder dergleichen an der Rahmenstruktur 12 eingreifen kann, wenn die Spurstabilisierungsfinne 30 sich in ihrer Ruhestellung befindet.

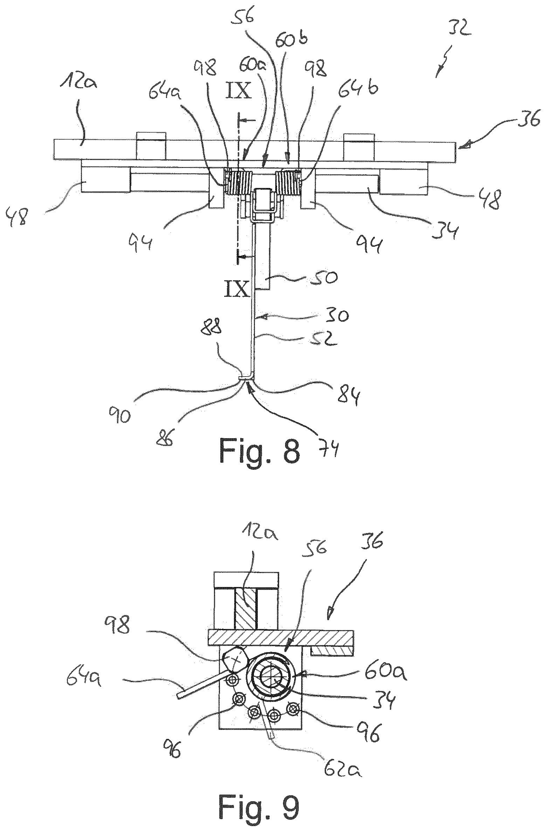

Die Figuren 7 bis 9 zeigen ein zweites Ausführungsbeispiel der Spurstabilisierungsfinne 30 und der Befestigungseinrichtung 32 sowie ein zweites Ausführungsbeispiel der Vorspanneinrichtung 56. In den Figuren 7 bis 9 sind nicht alle Bauteile und Komponenten mit Bezugszeichen versehen, wobei nachfolgend erwähnte und ansonsten funktionsmäßig gleiche Bauteile und Komponenten wie beim Ausführungsbeispiel gemäß den Figuren 3 bis 6 dieselben Bezugszeichen tragen.

Im Unterschied zum ersten Ausführungsbeispiel nach den Figuren 3 bis 6 weist die Spurstabilisierungsfinne 30 einen abgewandelten Eingreifrand 74 auf. Der Eingreifrand 74 weist dort einen vorderen Eintauchabschnitt 84, der beim Verschwenken der Spurstabilisierungsfinne 30 in die Arbeitsstellung zuerst mit der Schneeschicht 18 in Kontakt kommt, und einen hinteren Gleitabschnitt 86 auf. Entlang des Gleitabschnitts 86 weist der Eingreifrand 74 eine senkrecht vom Finnenblatt 52 abragende Gleitrippe 88 auf, die durch Umkanten des Finnenblatts 52 ausgebildet werden kann. Durch die Gleitrippe 88 ist eine untere Gleitfläche 90 der Spurstabilisierungsfinne 30 ausgebildet, die auch eine nennenswerte Erstreckung in Richtung quer zum Anhängerschlitten 10 hat. Durch diese Gleitfläche 90 kann verhindert werden, dass sich die Spurstabilisierungsfinne 30 in den Boden 20 eingräbt, wenn Bereiche mit weniger dicken Schneeschichten durchfahren werden.

Darüber hinaus weist die Spurstabilisierungsfinne 30 gemäß Figur 7 nahe und entlang dem Eingreifrand 74 mehrere Löcher 92 auf, so dass nicht eigens gezeigte Verlängerungsstücke an der Spurstabilisierungsfinne 30 befestigt werden können, die für diesen Zweck zu den Löchern 92 komplementäre Befestigungsstifte haben.

Außerdem ist die Vorspanneinrichtung 56 derart eingerichtet, dass die Vorspannkraft, die auf die Spurstabilisierungsfinne 30 wirkt, eingestellt werden kann. Hierfür ist jeweils außen neben jeder der Stützschenkel 64a, 64b der Schenkelfedern 60a, 60b eine Stellwange 94 angeordnet, die mit der Haltestruktur 36 verbunden sind und mehrere Durchgangsöffnungen 96 aufweisen, die beginnend oben bei der Haltestruktur 36 in regelmäßigen Abständen entlang einer Kreisbahn angeordnet sind. In die Durchgangsöffnungen 96 können Konterbolzen 98 eingesteckt werden, gegen welche die Stützschenkel 64a, 64b der Schenkelfedern 60a, 60b von unten kommend anliegen können.

Hierzu müssen die Stützschenkel 64a, 64b der Schenkelfedern 60a, 60b von der Haltestruktur 36 wegbewegt werden, wodurch die Schenkelfedern 60a, 60b stärker tordiert werden, als wenn deren Stützschenkel 64a, 64b sich unmittelbar gegen die Halterstruktur 36 abstützen. Hierdurch wird wiederum die Vorspannkraft auf die Spurstabilisierungsfinne 30 erhöht. Je weiter die Stützschenkel 64a, 64b von der Halterstruktur 36 weg nach unten bewegt und dort durch die Konterbolzen 98 gehalten sind, desto größer ist die Vorspannkraft, die durch die Vorspanneinrichtung 56 auf die Spurstabilisierungsfinne 30 ausgeübt wird.

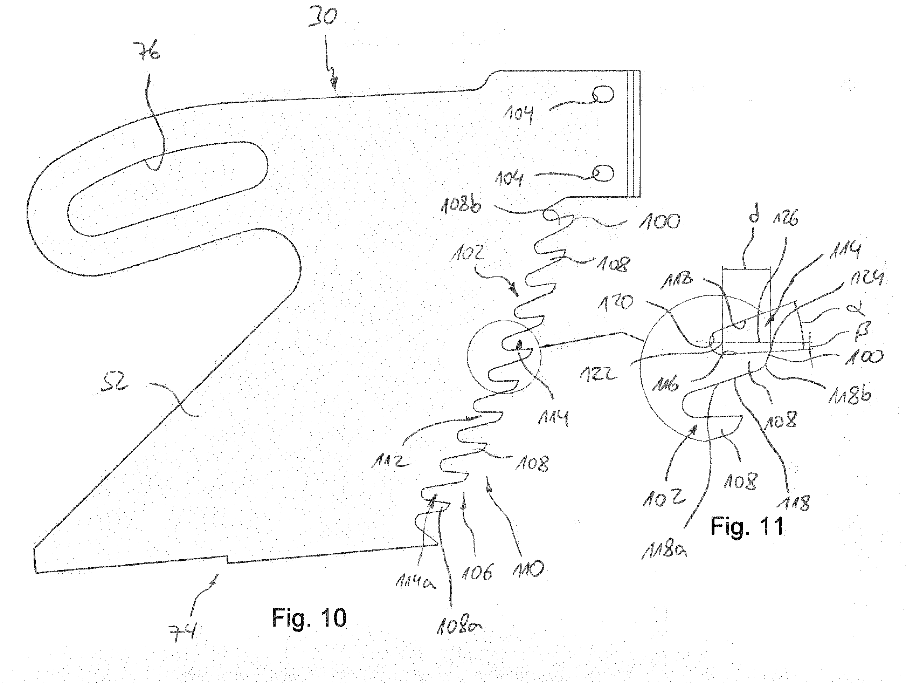

Bei allen erläuterten Ausführungsbeispielen der Spurstabilisierungsfinne 30 ist eine vordere Kante 100 des Finnenblattes 52 durch diejenige Kante des Finnenblattes 52 definiert, die nach vorne in Richtung auf die Deichseleinrichtung 24 weist, wenn die Spurstabilisierungsfinne 30 an dem Anhängerschlitten 10 befestigt ist. Diese vordere Kante 100 ist lediglich in den Figuren 10 und 11 mit einem Bezugszeichen versehen, welche eine nochmals abgewandelte Spurstabilisierungsfinne 30 zeigen.

Diese Spurstabilisierungsfinne 30 ist an einem dieser vorderen Kante 100 benachbarten Randbereich 102 mit der Verbindungsstrebe 50 des Anhängerschlittens 10 verschraubt, wozu in entsprechenden Positionen im Randbereich 102 zugehörige Durchgangslöcher 104 für die Schrauben 54 vorhanden sind; solche Durchgangslöcher 104 sind bei den Ausführungsbeispielen nach Figuren 1 bis 9 durch die Verbindungstrebe 50 verdeckt.

Die vordere Kante 100 weist bei der in den Figuren 10 und 11 gezeigten Abwandlung der Spurstabilisierungsfinne 30 eine Zahnstruktur 106 mit Zähnen 108 auf, die beim vorliegenden Ausführungsbeispiel eine Sägezahnstruktur 110 bilden und in gleichmäßigen Abständen entlang der vorderen Kante 100 angeordnet sind. Dabei verläuft die vordere Kante 100 grundsätzlich in einem in Richtung auf die Deichseleinrichtung 24 weisenden leichten Bogen 112, dem die Zähne 108 folgen. Im Verlauf der vorderen Kante 100 nach oben sind die Zähne 108 gleichmäßig immer stärker gegenüber der Horizontalen nach oben geneigt.

Zwischen zwei benachbarten Zähnen 108 ist jeweils eine Materialausnehmung 114 in den Randbereich 102 eingearbeitet, wobei die Materialausnehmungen 114 zwischen zwei benachbarten Zähnen 108 deren Geometrie definieren.

Eine Materialausnehmung 114 weist zwei einander gegenüberliegende Innenkanten 116 und 118 auf. Die erste Innenkante 116 befindet sich näher an dem Eingreifrand 74 der Spurstabilisierungsfinne 30 und definiert so eine untere Innenkante, wogegen die zweite Innenkante 118 entsprechen eine obere Innenkante der Materialausnehmung 114 festlegt. Die untere Innenkante 116 verläuft geradlinig. Die obere Innenkante 118 weist einen geradlinigen, radial innenliegenden Abschnitt 118a und einen gekrümmten, radial außen in die vordere Kante 100 des Finnenblattes 52 mündenden Abschnitt 118b auf. Die Seitenkante 116 und der geradlinige Abschnitt 118a der Seitenkante 118 erstrecken sich von der vorderen Kante 100 des Finnenblatts 52 kommend konvergierend nach radial innen und schließen einen Winkel α ein. Die Seitenränder 116, 118 sind radial innen durch eine Kreiskante 120 verbunden, welche einem Kreisboden eines Kreises mit einem Mittelpunkt 122 und einem Radius r folgt. Dieser Radius r beträgt beim vorliegenden Ausführungsbeispiel etwa r = 4,5 mm.

Der Mittelpunkt 122 ist in einem Abstand d von dem Ende 124 der unteren Seitenkante 116 an der vorderen Kante 100 des Finnenblattes 52 angeordnet. Beim vorliegenden Ausführungsbeispiel beträgt dieser Abstand etwa d = 15 mm. Das Ende 124 ist seinerseits mit dem gekrümmten Abschnitt 118b der benachbarten Materialausnehmung 114 verbunden.

Eine Referenzlinie 126 durch den Mittelpunkt 122 der Kreiskante 120 und die untere Seitenkante 116 der Ausnehmung 114 schließen einen Winkel β ein. Wird allen Ausnehmungen 114 solche zueinander parallelen Referenzlinien 126 zugeordnet, so unterscheiden sich die jeweiligen Winkel β für jede Ausnehmung 114 in ihrer Größe und/oder ihrem Betrag. Wenn die in Figur 11 zu erkennende Referenzlinie 126 beispielsweise horizontal ausgerichtet ist, so weist dadurch der unterste Sägezahn 108, der hier mit 108a bezeichnet ist, nach unten, währen der oberste Sägezahn 108, hier mit 108b bezeichnet, nach oben ragt.

Beim vorliegenden Ausführungsbeispiel beträgt der Winkel α bei allen Ausnehmungen 114 etwa α = 17°. Der Winkel β beträgt bei der untersten, mit 114a bezeichneten Ausnehmung etwa 8°, die Differenz der Winkel β₁ und β₂ bei zwei benachbarten Ausnehmungen 114 beträgt etwa 2,4°.

Die Winkel a und b sowie der Abstand d können selbstverständlich bei verschiedenen Spurstabilisierungsfinnen 30 unterschiedlich sein.

Bei den oben beschriebenen Ausführungsbeispielen ist die Spurstabilisierungsfinne 30 jeweils seitlich an der Verbindungsstrebe 50 befestigt, so dass sie bezogen auf die Querrichtung des Anhängerschlittens 10 etwas gegen die Mitte versetzt angeordnet ist. Aber auch eine mittige Anordnung kommt in Betracht, wozu entweder die Verbindungsstrebe 50 entsprechend versetzt angeordnet sein kann oder die Spurstabilisierungsfinne 30 durch eine andere Art der Befestigung mit der Verbindungsstrebe 50 erfolgt. Auch ist es möglich, das Finnenblatt 52 derart zu kanten, dass der größter Teil und vor allem der Eingreifrand 74 des Finnenblatts 52 mittig angeordnet ist.

## Patentansprüche

1. Anhängerschlitten für Schneetransportfahrzeuge mit
a) einer Rahmenstruktur (12), welche eine Ladefläche (16) vorgibt;
b) wenigstens zwei zueinander parallelen Schneekufen (14), welche die Rahmenstruktur (12) tragen und eine Gleitebene (35) definieren;
c) einer Deichseleinrichtung (24), mittels welcher der Anhängerschlitten (10) an ein Schneetransportfahrzeug ankoppelbar ist;
d) wobei wenigstens eine Spurstabilisierungsfinne (30) mittels einer Befestigungseinrichtung (32) an der Rahmenstruktur (12) befestigt ist, wobei die Spurstabilisierungsfinne (30) in einer Arbeitsstellung zumindest teilweise nach unten über die Gleitebene (35) hinausragt;
**dadurch gekennzeichnet, dass**
e) die Spurstabilisierungsfinne (30) ein Finnenblatt (52) mit einem unteren Eingreifrand (74) aufweist, der einen vorderen geradlinigen Eintauchabschnitt (84) und einen hinteren Gleitabschnitt (86) mit einer senkrecht von dem Finnenblatt (52) abragenden Gleitrippe (88) aufweist, durch die eine untere Gleitfläche (90) ausgebildet ist.

2. Anhängerschlitten nach Anspruch 1, **dadurch gekennzeichnet, dass** die Spurstabilisierungsfinne (30) von der Arbeitsstellung in eine Ruhestellung, und umgekehrt, verschwenkt werden kann.

3. Anhängerschlitten nach Anspruch 2, **dadurch gekennzeichnet, dass** die Spurstabilisierungsfinne (30) mittels einer Arretiereinrichtung (78) in der Ruhestellung arretierbar ist.

4. Anhängerschlitten nach einem der Ansprüche 1 bis 3, **dadurch gekennzeichnet, dass** die Spurstabilisierungsfinne (30) um eine Schwenkachse (34) verschwenkbar gelagert ist, welche parallel zur Gleitebene (35) und senkrecht zu den Längsachsen der Schneekufen (14) verläuft.

5. Anhängerschlitten nach Anspruch 4, **dadurch gekennzeichnet, dass** die Spurstabilisierungsfinne (30) in ihrer Arbeitsstellung schwenkbeweglich um die Schwenkachse (34) bleibt.

6. Anhängerschlitten nach einem der Ansprüche 1 bis 5, **dadurch gekennzeichnet, dass** die Spurstabilisierungsfinne (30) an einem hinteren Ende (28) der Rahmenstruktur (12) befestigt ist.

7. Anhängerschlitten nach einem der Ansprüche 1 bis 6, **dadurch gekennzeichnet, dass** die Befestigungseinrichtung (32) eine Haltestruktur (36) umfasst, welche einen hinteren Querholm (12a) der Rahmenstruktur (12) umgreifen kann.

8. Anhängerschlitten nach einem der Ansprüche 1 bis 7, **dadurch gekennzeichnet, dass** die Befestigungseinrichtung (32) eine Vorspanneinrichtung (56) umfasst, mittels welcher die Spurstabilisierungsfinne (30) unter Vorspannung in ihre Arbeitsstellung gedrückt wird.

9. Anhängerschlitten nach Anspruch 8, **dadurch gekennzeichnet, dass** die Vorspanneinrichtung (56) eine Federeinrichtung (58) umfasst.

10. Anhängerschlitten nach Anspruch 8 oder 9, **dadurch gekennzeichnet, dass** die Vorspanneinrichtung (56) wenigstens eine Schenkelfeder (60a, 60b) oder eine Doppelschenkelfeder (66) umfasst.

11. Anhängerschlitten nach Anspruch 10 unter Rückbezug auf Anspruch 4, **dadurch gekennzeichnet, dass** die Schenkelfeder (60a, 60b) oder die Doppelschenkelfeder (66) auf der Schwenkachse (34) sitzt.

12. Anhängerschlitten nach einem der Ansprüche 8 bis 11, **dadurch gekennzeichnet, dass** die Vorspanneinrichtung (56) derart eingerichtet ist, dass die Vorspannkraft, die auf die Spurstabilisierungsfinne (30) wirkt, einstellbar ist.

13. Anhängerschlitten nach einem der Ansprüche 1 bis 12, **dadurch gekennzeichnet, dass** das Finnenblatt (52) an einer vorderen Kante (100), die in Richtung der Deichseleinrichtung (24) weist, eine Zahnstruktur (106) aufweist.

14. Anhängerschlitten nach Anspruch 13, **dadurch gekennzeichnet, dass** die Zahnstruktur (106) eine Sägezahnstruktur (110) ist.

## Claims

1. Trailer sled for snow transport vehicles having
a) a frame structure (12) which defines a loading area (16);
b) at least two mutually parallel snow runners (14) which support the frame structure (12) and define a sliding plane (35);
c) a drawbar device (24) by means of which the trailer sled (10) can be coupled to a snow transport vehicle;
wherein
d) at least one track stabilising fin (30) is fastened to the frame structure (12) by means of a fastening device (32), wherein the track stabilising fin (30) at least partially projects downward beyond the sliding plane (35) in a working position;
**characterised in that**
e) the track stabilising fin (30) comprises a fin blade (52) having a lower engaging edge (74) which has a front rectilinear immersion section (84) and a rear sliding section (86) having a sliding rib (88) projecting perpendicularly from the fin blade (52), wherein a lower sliding surface (90) is formed by the sliding rib (88).

2. Trailer sled according to claim 1, **characterised in that** the track stabilising fin (30) can be pivoted from the working position to a rest position, and vice versa.

3. Trailer sled according to claim 2, **characterised in that** the track stabilising fin (30) can be locked in the rest position by means of a locking device (78).

4. Trailer sled according to any one of claims 1 to 3, **characterised in that** the track stabilising fin (30) is mounted such that it is pivotable about a pivot axis (34) which runs parallel to the sliding plane (35) and perpendicular to the longitudinal axes of the snow runners (14).

5. Trailer sled according to claim 4, **characterised in that** the track stabilising fin (30) remains pivotally movable about the pivot axis (34) in its working position.

6. Trailer sled according to any one of claims 1 to 5, **characterised in that** the track stabilising fin (30) is attached to a rear end (28) of the frame structure (12).

7. Trailer sled according to any one of claims 1 to 6, **characterised in that** the fastening device (32) comprises a retaining structure (36) adapted to engage around a rear cross member (12a) of the frame structure (12).

8. Trailer sled according to any one of claims 1 to 7, **characterised in that** the fastening device (32) comprises a pretensioning device (56) by means of which the track stabilising fin (30) is pushed into its working position under pretension.

9. Trailer sled according to claim 8, **characterised in that** the pretensioning device (56) comprises a spring device (58).

10. Trailer sled according to claim 8 or 9, **characterised in that** the pretensioning device (56) comprises at least one leg spring (60a, 60b) or a double leg spring (66).

11. Trailer sled according to claim 10 with reference to claim 4, **characterised in that** the leg spring (60a, 60b) or the double leg spring (66) is seated on the pivot axis (34).

12. Trailer sled according to any one of claims 8 to 11, **characterised in that** the pretensioning device (56) is configured such that the pretensioning force acting on the track stabilising fin (30) is adjustable.

13. Trailer sled according to any one of claims 1 to 12, **characterised in that** the fin blade (52) has a toothed structure (106) at a front edge (100) facing in the direction of the drawbar device (24).

14. Trailer sled according to claim 13, **characterised in that** the toothed structure (106) is a sawtooth structure (110).

## Revendications

1. Traîneau attelé destiné à des véhicules de transport sur neige, comprenant
a) une structure d'encadrement (12) préétablissant une surface de chargement (16);
b) au moins deux patins (14) de glisse sur neige, parallèles l'un à l'autre, qui portent ladite structure d'encadrement (12) et définissent un plan de glissement (35);
c) un dispositif à timon d'attelage (24), au moyen duquel ledit traîneau attelé (10) peut être accouplé à un véhicule de transport sur neige ;
d) sachant
qu'au moins un aileron (30) stabilisateur de trajectoires est fixé à ladite structure d'encadrement (12) au moyen d'un dispositif de fixation (32), lequel aileron (30) stabilisateur de trajectoires fait au moins partiellement saillie vers le bas au-delà dudit plan de glissement (35), dans une position de travail ; **caractérisé par le fait que**
e) l'aileron (30) stabilisateur de trajectoires comporte une pale (52) dotée d'un bord inférieur d'engagement (74) muni d'une zone antérieure rectiligne de pénétration (84), et d'une zone postérieure de glissement (86) présentant une nervure de glissement (88) qui fait saillie perpendiculairement au-delà de ladite pale (52) de l'aileron, et par laquelle est formée une surface inférieure de glissement (90).

2. Traîneau attelé selon la revendication 1, **caractérisé par le fait que** l'aileron (30) stabilisateur de trajectoires peut être amené, par pivotement, de la position de travail à une position de repos, et inversement.

3. Traîneau attelé selon la revendication 2, **caractérisé par le fait que** l'aileron (30) stabilisateur de trajectoires peut être arrêté dans la position de repos au moyen d'un dispositif d'arrêt (78).

4. Traîneau attelé selon l'une des revendications 1 à 3, **caractérisé par le fait que** l'aileron (30) stabilisateur de trajectoires est monté, avec faculté de pivotement, autour d'un axe de pivotement (34) s'étendant parallèlement au plan de glissement (35) et perpendiculairement aux axes longitudinaux des patins (14) de glisse sur neige.

5. Traîneau attelé selon la revendication 4, **caractérisé par le fait que** l'aileron (30) stabilisateur de trajectoires conserve, dans sa position de travail, sa faculté de pivotement autour de l'axe de pivotement (34).

6. Traîneau attelé selon l'une des revendications 1 à 5, **caractérisé par le fait que** l'aileron (30) stabilisateur de trajectoires est fixé à une extrémité postérieure (28) de la structure d'encadrement (12).

7. Traîneau attelé selon l'une des revendications 1 à 6, **caractérisé par le fait que** le dispositif de fixation (32) inclut une structure de maintien (36) pouvant ceinturer une traverse postérieure (12a) de la structure d'encadrement (12).

8. Traîneau attelé selon l'une des revendications 1 à 7, **caractérisé par le fait que** le dispositif de fixation (32) inclut un dispositif de précontrainte (56) au moyen duquel l'aileron (30) stabilisateur de trajectoires est poussé, avec précontrainte, vers sa position de travail.

9. Traîneau attelé selon la revendication 8, **caractérisé par le fait que** le dispositif de précontrainte (56) inclut un dispositif (58) à ressorts.

10. Traîneau attelé selon la revendication 8 ou 9, **caractérisé par le fait que** le dispositif de précontrainte (56) inclut au moins un ressort (60a, 60b) à branches, ou un ressort (66) à branche double.

11. Traîneau attelé selon la revendication 10 rattachée à la revendication 4, **caractérisé par le fait que** le ressort (60a, 60b) à branches, ou le ressort (66) à branche double, est implanté sur l'axe de pivotement (34).

12. Traîneau attelé selon l'une des revendications 8 à 11, **caractérisé par le fait que** le dispositif de précontrainte (56) est agencé de façon à permettre un réglage de la force de précontrainte agissant sur l'aileron (30) stabilisateur de trajectoires.

13. Traîneau attelé selon l'une des revendications 1 à 12, **caractérisé par le fait que** la pale (52) de l'aileron présente une structure dentée (106) au niveau d'une arête antérieure (100) qui pointe en direction du dispositif à timon d'attelage (24).

14. Traîneau attelé selon la revendication 13, **caractérisé par le fait que** la structure dentée (106) est une structure (110) à dents de scie.
